(19) **Europäisches Patentamt European Patent Office Office européen des brevets**

(11) **EP 3 077 559 B2**

(12) **NOUVEAU FASCICULE DE BREVET EUROPEEN**
Après la procédure d'opposition

(45) Date de publication et mention de la décision concernant l'opposition:
**12.11.2025 Bulletin 2025/46**

(45) Mention de la délivrance du brevet:
**22.08.2018 Bulletin 2018/34**

(21) Numéro de dépôt: **14821688.0**

(22) Date de dépôt: **02.12.2014**

(51) Classification Internationale des Brevets (IPC):
**C22C 21/16** (2006.01)     **C22C 21/14** (2006.01)
**C22F 1/057** (2006.01)     **B64C 3/26** (2006.01)

(52) Classification Coopérative des Brevets (CPC):
**B64C 3/26; C22C 21/14; C22C 21/16; C22F 1/057**

(86) Numéro de dépôt international:
**PCT/FR2014/000256**

(87) Numéro de publication internationale:
**WO 2015/082779 (11.06.2015 Gazette 2015/23)**

(54) **PRODUIT EN ALLIAGE ALUMINIUM-CUIVRE-LITHIUM POUR ÉLÉMENT D'INTRADOS A PROPRIÉTÉS AMÉLIORÉES ET PROCÉDÉ DE SA PRODUCTION**

ALUMINIUM-/KUPFER-/LITHIUMLEGIERUNGSMATERIAL FÜR EIN FLÜGELUNTERSEITENELEMENT MIT VERBESSERTEN EIGENSCHAFTEN UND VERFAHREN ZU DESSEN HERSTELLUNG

ALUMINUM/COPPER/LITHIUM ALLOY MATERIAL FOR UNDERWING ELEMENT HAVING ENHANCED PROPERTIES AND PROCESS FOR ITS MANUFACTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2013 FR 1302833**

(43) Date de publication de la demande:
**12.10.2016 Bulletin 2016/41**

(73) Titulaire: **Constellium Issoire**
**63500 Issoire (FR)**

(72) Inventeur: **BAYONA-CARRILLO, Nicolas**
**38500 Voiron (FR)**

(74) Mandataire: **Constellium - Propriété Industrielle**
**C-TEC Constellium Technology Center**
**Propriété Industrielle**
**Parc Economique Centr'Alp**
**725, rue Aristide Bergès**
**CS10027**
**38341 Voreppe (FR)**

(56) Documents cités:
**EP-A1- 1 966 402         US-A- 5 198 045**
**US-A1- 2007 181 229      US-A1- 2010 126 637**
**US-A1- 2010 314 007      US-A1- 2011 278 397**
**US-A1- 2013 255 839**

- **LEE CHANG-SOON ET AL: "Effect of microstructure and load ratio on fatigue crack growth behavior of advanced Al - Cu - Li - Mg -Ag alloys", METALS AND MATERIALS, KOREAN INSITUTE OF METALS AND MATERIALS, KOREA, vol. 3, no. 1, 31 December 1997 (1997-12-31), pages 51 - 59, XP009128087, ISSN: 1598-9623, DOI: 10.1007/BF03026106**

EP 3 077 559 B2

## Description

### Domaine de l'invention

La présente invention concerne en général des produits en alliages d'aluminium et, plus particulièrement, de tels produits, leurs procédés de fabrication et d'utilisation, en particulier dans l'industrie aérospatiale.

### Etat de la technique

Un effort de recherche continu est réalisé afin de développer des matériaux qui puissent simultanément réduire le poids et augmenter l'efficacité des structures d'avions à hautes performances. Les alliages aluminium-lithium (AlLi) sont très intéressants à cet égard, car le lithium peut réduire la densité de l'aluminium de 3 % et augmenter le module d'élasticité de 6 % pour chaque pourcent en poids de lithium ajouté.

Le brevet US 5,032,359 décrit une vaste famille d'alliages aluminium-cuivre-lithium dans lesquels l'addition de magnésium et d'argent, en particulier entre 0,3 et 0,5 pourcent en poids, permet d'augmenter la résistance mécanique.

Le brevet US 5,198,045 décrit une famille d'alliages comprenant (en % en poids) (2,4-3,5)Cu, (1,35-1,8)Li, (0,25-0,65)Mg, (0,25-0,65)Ag, (0,08-0,25) Zr. Les produits corroyés fabriqués avec ces alliages combinent une densité inférieure à 2,64 g/cm$^3$ et un compromis entre la résistance mécanique et la ténacité intéressant.

Le brevet US 7,229,509 décrit une famille d'alliages comprenant (en % en poids) (2,5-5,5)Cu, (0,1-2,5) Li, (0,2-1,0) Mg, (0,2-0,8) Ag, (0,2-0,8) Mn, (jusque 0,4) Zr ou d'autres affinants tels que Cr, Ti, Hf, Sc et V. Les exemples présentés ont un compromis entre la résistance mécanique et la ténacité amélioré mais leur densité est supérieure à 2,7 g/cm$^3$.

Le brevet EP 1,966,402 décrit un alliage ne contenant pas de zirconium destiné à des tôles de fuselage de structure essentiellement recristallisée comprenant (en % en poids) (2,1-2,8)Cu, (1,1-1,7) Li, (0,2-0,6) Mg, (0,1-0,8) Ag, (0,2-0,6) Mn.

Le brevet EP 1,891,247 décrit un alliage destiné à des tôles de fuselage comprenant (en % en poids) (3,0-3,4)Cu, (0,8-1,2) Li, (0,2-0,6) Mg, (0,2-0,5) Ag et au moins un élément parmi Zr, Mn, Cr, Sc, Hf et Ti, dans lequel les teneurs en Cu et en Li répondent à la condition Cu + 5/3 Li < 5,2.

Le brevet US 5,455,003 décrit un procédé de production d'alliages aluminium-cuivre-lithium présentant des propriétés améliorées de résistance mécanique et ténacité à température cryogénique. Ce procédé s'applique notamment à un alliage comprenant (en % en poids) (2,0-6,5)Cu, (0,2-2,7) Li, (0-4,0) Mg, (0-4,0) Ag, (0-3,0) Zn.

La demande internationale WO 2010/055225 décrit un procédé de fabrication dans lequel on élabore un bain de métal liquide comprenant 2,0 à 3,5 % en poids de Cu, 1,4 à 1,8 % en poids de Li, 0,1 à 0,5 % en poids d'Ag, 0,1 à 1,0 % en poids de Mg, 0,05 à 0,18 % en poids de Zr, 0,2 à 0,6 % en poids de Mn et au moins un élément choisi parmi Cr, Sc, Hf et Ti, la quantité de l'élément, s'il est choisi, étant de 0,05 à 0,3 % en poids pour Cr et pour Sc, 0,05 à 0,5 % en poids pour Hf et de 0,01 à 0,15 % en poids pour Ti, le reste étant de l'aluminium et des impuretés inévitables ; on coule une forme brute à partir du bain de métal liquide et on homogénéise ladite forme brute à une température comprise entre 515 °C et 525°C de façon à ce que le temps équivalent à 520 °C pour l'homogénéisation soit compris entre 5 et 20 heures.

La demande internationale WO2011/141647 concerne un alliage à base d'aluminium comprenant, en % en poids, 2,1 à 2,4 % de Cu, 1,3 à 1,6% de Li, 0,1 à 0,5% de Ag, 0,2 à 0,6 % de Mg, 0,05 à 0,15 % de Zr, 0,1 à 0,5 % de Mn, 0,01 à 0,12 % de Ti, optionnellement au moins un élément choisi parmi Cr, Sc, et Hf, la quantité de l'élément, s'il est choisi, étant de 0,05 à 0,3% pour Cr et pour Sc, 0,05 à 0,5% pour Hf, une quantité de Fe et de Si inférieure ou égale à 0,1 chacun, et des impuretés inévitables à une teneur inférieure ou égale à 0,05 chacune et 0,15 au total. L'alliage permet la réalisation de produits filés, laminés et/ou forgés particulièrement adaptés à la fabrication d'éléments d'intrados d'aile d'avion.

L'article de Lee Chang-Soon et Al « Effect of microstructure and load ratio on fatigue crack growth behavior of advanced Al-Cu-Li-Mg-Ag alloys » , Metals and Materials, Vol 3 N°1 (1997) pp 51 - 59 décrit le comportement de croissance des fissures en fatigue de trois alliages Al-Cu-Li-Mg-Ag pour des rapports de chargement de 0,1 et 0,75.

On connait par ailleurs l'alliage AA2196 comprenant (en % en poids) (2,5-3,3)Cu, (1,4-2,1) Li, (0,25-0,8) Mg, (0,25-0,6) Ag, (0,04-0,18) Zr et au plus 0,35 Mn et l'alliage AA2296 comprenant (en % en poids) (2,1-2,8)Cu, (1,3-1,9) Li, (0,20-0,8) Mg, (0,25-0,6) Ag, (0,04-0,18) Zr (0,05-050) Mn et l'alliage AA2076 (2,0-2,7)Cu, (1,2-1,8) Li, (0,20-0,8) Mg, (0,15-0,40) Ag, (0,05-0,16) Zr (0,05-050) Mn.

Certaines pièces destinées à la construction aéronautique nécessitent un compromis de propriétés particulier que ces alliages et produits connus ne permettent pas d'atteindre. Notamment, les pièces utilisées dans la fabrication d'intrados d'aile d'avion nécessitent une ténacité très élevée et une résistance mécanique néanmoins suffisante ainsi que des propriétés en fatigue, notamment en fatigue sous spectre avantageuses. Il est nécessaire que ces propriétés soient stables thermiquement, c'est-à-dire qu'elles n'évoluent pas significativement lors d'un traitement de vieillissement à une température telle que 85 °C. Obtenir l'ensemble de ces propriétés simultanément avec la densité la plus basse possible constitue un compromis de propriétés désirables.

Il existe un besoin concernant un produit en alliage en Al-Cu-Li stable thermiquement, de faible densité et de ténacité et de résistance à la propagation des fissures en fatigue élevées avec cependant une résistance mécanique suffisante, pour des applications aéronautiques et en particulier pour des applications d'éléments de voilure intrados.

**Objet de l'invention**

Un premier objet de l'invention est un procédé de fabrication d'un produit laminé ou forgé dans lequel :

1. (a) on coule une plaque en alliage de composition, en % en poids,

Cu : 1,8 - 2,6
Li : 1,3 - 1,8
Mg : 0,1 - 0,5
Mn < 0,05 et Zr 0.10 - 0.16
Ag : 0 - 0,5
Zn < 0,20
Ti: 0,01 - 0,15
Fe : < 0,1
Si: < 0,1

autres éléments < 0,05 chacun et < 0,15 au total, reste aluminium dont la densité est inférieure à 2,670 g/cm3,

2. (b) on homogénéise ladite plaque à 480 à 540°C pendant 5 à 60 heures,
3. (c) on déforme à chaud par laminage et/ou forgeage ladite plaque les conditions de déformation à chaud étant telles lorsque la teneur en manganèse est inférieure à 0,05 % en poids et la teneur en zirconium est comprise entre 0,10 et 0,16 % en poids la température finale de déformation à chaud est au plus de 400 °C, pour obtenir un produit laminé et/ou forgé dont l'épaisseur est comprise entre 14 et 100 mm,
4. (d) on met en solution ledit produit à 490 à 530°C pendant 15 minutes à 8 heures,
5. (e) on trempe avec de l'eau,
6. (f) on tractionne de façon contrôlée ledit produit avec une déformation permanente de 1 à 6 %,
7. (g) on réalise un revenu dudit produit par chauffage à 120 à 170°C pendant 5 à 100 heures.

Un autre objet de l'invention est produit laminé et/ou forgé susceptible d'être obtenu par le procédé selon l'invention dont l'épaisseur est comprise entre 20 mm et 50 mm et dont la limite d'élasticité à mi-épaisseur Rp0,2(L) est au moins 390 MPa, la ténacité KappL-T (W= 406mm) est au moins 105 MPa√m même après vieillissement de 3000 heures à 85 °C et le nombre de cycles dans la condition 6,5 MPa√m<ΔK<16.6 MPa√m d'au moins 250 000 pour un essai de fatigue réalisé selon la norme ASTM E647 sur des éprouvettes de type CCT de largeur W=160mm prélevées dans la direction L-T à ¼ épaisseur. Selon un mode de réalisation avantageux, le produit selon l'invention, dont l'épaisseur est comprise entre 14 mm et 100 mm, est caractérisé en ce que à mi-épaisseur la fraction volumique des grains ayant une texture laiton est comprise entre 25 et 40 % et l'indice de texture est compris entre 12 et 18.

Encore un autre objet de l'invention est l'utilisation d'un produit selon l'invention comme élément de structure dans la construction aéronautique et de préférence comme élément d'intrados d'aile d'avion.

**Description des figures**

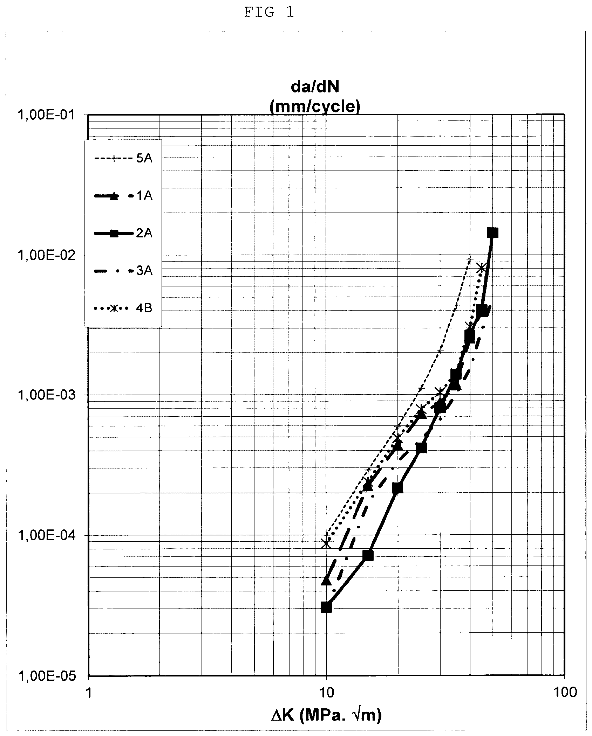

Figure 1 : Vitesse de propagation de fissures en fatigue da/dN mesurées selon la norme E647

**Description de l'invention**

Sauf mention contraire, toutes les indications concernant la composition chimique des alliages sont exprimées comme un pourcentage en poids basé sur le poids total de l'alliage. La désignation des alliages se fait en conformité avec les règlements de The Aluminium Association, connus de l'homme du métier. La densité dépend de la composition et est déterminée par calcul plutôt que par une méthode de mesure de poids. Les valeurs sont calculées en conformité avec la procédure de The Aluminium Association, qui est décrite pages 2-12 et 2-13 de « Aluminum Standards and Data ». Les définitions des états métallurgiques sont indiquées dans la norme européenne EN 515.

Sauf mention contraire, les caractéristiques mécaniques statiques, en d'autres termes la résistance à la rupture ultime $R_m$, la limite d'élasticité en traction $R_{p0,2}$ et l'allongement à la rupture A, sont déterminées par un essai de traction selon la norme EN 10002-1 ou NF EN ISO 6892-1, l'emplacement auquel les pièces sont prises et leur sens étant définis par la norme EN 485-1.

Le facteur d'intensité de contrainte ($K_Q$) est déterminé selon la norme ASTM E 399. Ainsi, la proportion des éprouvettes définie au paragraphe 7.2.1 de cette norme est toujours vérifiée de même que la procédure générale définie au paragraphe 8. La norme ASTM E 399 donne aux paragraphes 9.1.3 et 9.1.4 des critères qui permettent de déterminer si $K_Q$ est une valeur valide de $K_{1C}$. Ainsi, une valeur $K_{1C}$ est toujours une valeur $K_Q$ la réciproque n'étant pas vraie. Dans le cadre de l'invention, les critères des paragraphes 9.1.3 et 9.1.4 de la norme ASTM E399 ne sont pas toujours vérifiés, cependant pour une géométrie d'éprouvette donnée, les valeurs de $K_Q$ présentées sont toujours comparables entre elles, la géométrie d'éprouvette permettant d'obtenir une valeur valide de $K_{1C}$ n'étant pas toujours accessible compte tenu des contraintes liées aux dimensions des tôles. Dans le cadre de l'invention, l'épaisseur de l'éprouvette choisie est une épaisseur jugée adaptée par l'homme du métier pour obtenir une valeur valide de $K_{1C}$.

Les valeurs du facteur d'intensité de contrainte apparent à la rupture ($K_{app}$) et du facteur d'intensité de contrainte à la rupture ($K_c$) sont telles que définies dans la norme ASTM E561.

L'essai de propagation de fissure en fatigue à température ambiante a été réalisé en conformité avec la norme ASTM E647. Le présent inventeur a utilisé une éprouvette de type CCT de largeur W= 160mm prélevée dans la direction L-T à ¼ épaisseur et d'épaisseur B = 5 mm. L'éprouvette a été pré-fissurée par un chargement en fatigue en accord avec les recommandations de la norme. Cette pratique permet de démarrer l'essai de propagation sur une fissure droite, aigüe et éloignée de l'entaille mécanique. Pour l'essai de propagation l'éprouvette a été chargée de façon cyclique avec une amplitude de charge constante. La fréquence d'essai a aussi été maintenue constante pendant l'essai, tout comme le rapport de charge R=0,1.

Le présent inventeur a enregistré le nombre de cycles réalisés sous les conditions mentionnées ci-dessus dans un intervalle de taille de fissure tel que la condition 6,5 MPa√m<ΔK<16.6 MPa√m était respectée.

Sauf mention contraire, les définitions de la norme EN 12258 s'appliquent. On appelle ici « élément de structure » ou « élément structural » d'une construction mécanique une pièce mécanique pour laquelle les propriétés mécaniques statiques et/ou dynamiques sont particulièrement importantes pour la performance de la structure, et pour laquelle un calcul de structure est habituellement prescrit ou réalisé. Il s'agit typiquement d'éléments dont la défaillance est susceptible de mettre en danger la sécurité de ladite construction, de ses utilisateurs, de ses usagers ou d'autrui. Pour un avion, ces éléments de structure comprennent notamment les éléments qui composent le fuselage (tels que la peau de fuselage (fuselage skin en anglais), les raidisseurs ou lisses de fuselage (stringers), les cloisons étanches (bulkheads), les cadres de fuselage (circumferential frames), les ailes (tels que la peau de voilure (wing skin), les raidisseurs (stringers ou stiffeners), les nervures (ribs) et longerons (spars)) et l'empennage composé notamment de stabilisateurs horizontaux et verticaux (horizontal or vertical stabilisers), ainsi que les profilés de plancher (floor beams), les rails de sièges (seat tracks) et les portes.

La texture cristallographique peut être décrite par une fonction mathématique en 3 dimensions. Cette fonction est connue dans le métier comme Fonction de Densité des Orientations (FDO). Elle est définie comme la fraction volumique du matériau dV/V ayant une orientation g à dg près :

$$\frac{dV/V}{dg} = f(g) = f(\varphi_1, \Phi, \varphi_2)$$

où ($\phi 1$, $\Phi$, $\phi 2$) sont les angles d'Euler décrivant l'orientation g.

Le présent inventeur a calculé la FDO de chaque tôle par la méthode des harmoniques sphériques à partir de quatre figures de pôles mesurés par diffraction de rayons X sur un goniomètre de textures traditionnel. Dans le cadre de l'invention les mesures des figures de pôles ont été réalisées sur des échantillons découpés à la mi-épaisseur des tôles. De même, dans le but d'obtenir des mesures statistiquement représentatives, la taille des échantillons a été adaptée à la taille de grain.

Il est possible de simplifier l'information contenue dans la FDO. Ceci est fait couramment dans le métier afin de décrire des aspects choisis de la distribution des orientations dans le matériau. Un exemple de cette pratique est l'indice de texture appelé « I ». L'indice de texture informe sur l'acuité de la texture cristallographique sans donner de détails sur la nature de celle-ci. Il est égal à l'unité pour un matériau possédant une distribution des orientations aléatoire, mais sa valeur augmente lorsque les textures sont plus fortement marquées. L'indice de texture I est calculé avec l'équation suivante :

$$I = \oint [f(g)]^2 dg$$

Une autre façon de simplifier l'information de la FDO est le calcul de la fraction volumique de cristallites qui possèdent une orientation spécifique. Pour ce faire, on définit de façon arbitraire l'orientation de référence ainsi qu'un angle de désorientation maximale autour de cette orientation. On intègre ensuite la FDO dans le domaine ainsi défini, ce qui permet de déduire le volume relatif d'orientations contenues dans ce domaine par rapport au volume total. Le présent inventeur a utilisé une tolérance de 15° autour des orientations « cuivre », « laiton » et « S » dans le but de décrire la texture obtenue. Les orientations cristallographiques « cuivre », « laiton » et « S » sont connues de l'homme du métier et décrites par exemple dans le document de référence de U. F. Kocks, C. N. Tomé, et H.-R. Wenk, « Texture and anisotropy: preferred orientations in polycrystals and their effect on materials properties ». Cambridge University Press, 2000. Les orientations « cuivre », « laiton » et « S » sont reproduites dans le tableau ci-dessous.

| Nom | Indices | Bunge ($\phi_1, \Phi, \phi_2$) | Kocks ($\Psi, \Theta, \varphi$) |
|---|---|---|---|
| Cuivre | {112}<111 > | 90,35,45 | 0,35,45 |
| S | {123}<634 > | 59,37,63 | 149,37,27 |
| Laiton | {110}<112> | 35,45,0 | 55,45,0 |

D'une manière inattendue, l'inventeur a découvert que la combinaison de certaines compositions d'alliages Al-Cu-Li avec des conditions précises de transformation thermo-mécaniques permettait d'obtenir des produits ayant une texture cristallographique particulière, ayant pour conséquence un compromis très favorable entre résistance mécanique, ténacité, résistance à la propagation des fissures en fatigue et stabilité thermique dont la densité est inférieure à 2,670 g/cm$^3$. Les produits selon l'invention sont obtenus par un procédé comprenant les étapes de coulée, homogénéisation, déformation à chaud, mise en solution, trempe, détensionnement et revenu.

Tout d'abord on coule une plaque en alliage selon l'invention.

La teneur en cuivre de l'alliage pour lequel l'effet surprenant est observé est comprise entre 1,8 et 2,6% en poids. De préférence la teneur en cuivre est au plus de 2,5 %. Dans un mode de réalisation de l'invention la teneur maximale en cuivre est 2.3% ou préférentiellement 2,2% en poids. Préférentiellement la teneur en cuivre est au moins 1,9 ou avantageusement 1,95 % en poids.

La teneur en lithium est comprise entre 1,3 et 1,8%. Avantageusement la teneur en lithium est au moins 1,35 et de préférence 1,4 % en poids. Préférentiellement la teneur en lithium est au plus 1,65 ou de préférence 1,6 % en poids.

La teneur en argent est comprise entre 0 et 0,5% en poids. Dans une réalisation avantageuse de l'invention, la teneur en argent est comprise entre 0,05 et 0,25 % en poids. Dans un mode de réalisation de l'invention, qui présente l'avantage de minimiser la densité, la teneur en argent est au plus de 0,05 % en poids.

La teneur en magnésium est comprise entre 0,1 et 0.5% en poids. Préférentiellement la teneur en magnésium est au plus de 0,4 % en poids. Dans un mode de réalisation avantageux de l'invention la teneur en magnésium est au moins de 0,2 % en poids. Le présent inventeur a constaté que les propriétés désirables des produits selon l'invention peuvent être obtenues dans deux modes de réalisation pour ce qui concerne l'addition de manganèse et de zirconium.

On ajoute du zirconium entre 0,10 et 0,16 % en poids et de préférence entre 0,11 et 0,15 % en poids et on limite la teneur en manganèse à moins de 0,05 % en poids et de préférence moins de 0,04 % en poids. L'addition simultanée de zirconium et de manganèse ne permet pas d'obtenir les propriétés de fatigue, ténacité, résistance mécanique des produits selon l'invention. L'alliage contient également de 0,01 à 0,15 % en poids de Ti et de préférence de 0,02 à 0,10 % en poids de façon notamment à contrôler la taille de grain lors de la coulée.

Il est préférable de limiter la teneur des impuretés inévitables de l'alliage de façon à atteindre les propriétés de tolérance aux dommages les plus favorables. Les impuretés inévitables comprennent le fer et le silicium, ces éléments ont une teneur inférieure à 0,1 % en poids chacun et de préférence une teneur inférieure à 0,08 % en poids et 0,06 % en poids pour le fer et le silicium, respectivement, les autres impuretés ont une teneur inférieure à 0,05 % en poids chacune et 0,15 % en poids au total. Par ailleurs la teneur en zinc est inférieure à 0,20 % en poids et de préférence inférieure à 0,04 % en poids. Dans un mode de réalisation de l'invention la teneur en zinc est inférieure à 0,05 % en poids, la teneur en silicium est inférieure à 0,08 % en poids et la teneur en fer est inférieure à 0,08 % en poids.

La densité de l'alliage à température ambiante est inférieure à 2,670 g/cm$^3$. De préférence, la composition est ajustée de façon à obtenir une densité à température ambiante inférieure à 2,640 g/cm3, de manière encore plus préférée inférieure à 2,630 g/cm3.

La plaque est ensuite homogénéisée. La température d'homogénéisation est de préférence située entre 480 et 540°C pendant 5 à 60 heures. De manière préférée, la température d'homogénéisation est comprise entre 490 °C et 510°C.

Après homogénéisation, la plaque est en général refroidie jusqu'à température ambiante avant d'être préchauffée en vue d'être déformée à chaud par laminage et/ou forgeage. Le préchauffage a pour objectif d'atteindre une température initiale de déformation de préférence comprise entre 420 et 520 °C et de manière préférée de l'ordre de 430 °C à 460 °C permettant la déformation de la forme brute. La déformation à chaud est effectuée par laminage et/ou forgeage. De façon préférée la plaque est essentiellement déformée par laminage de façon à obtenir une tôle.

La température de déformation à chaud dépend de la composition de la plaque. Lorsque la teneur en manganèse est inférieure à 0,05 % en poids et la teneur en zirconium est comprise entre 0,10 et 0,16 % en poids, les conditions de déformation à chaud sont telles que la température finale de déformation à chaud est au plus de 400°C, préférentiellement au plus de 390 °C et de préférence au plus de 380 °C.

Le produit ainsi obtenu est ensuite mis en solution de préférence par traitement thermique entre 490 et 530 °C pendant 15 min à 8 h, puis trempé typiquement avec de l'eau.

Le produit subit ensuite une traction contrôlée de 1 à 6 % et préférentiellement d'au moins 2%, typiquement d'environ 4%. Dans un mode de réalisation de l'invention, on réalise un laminage à froid avec une réduction comprise entre 5% et 15% avant l'étape de traction contrôlée. Des étapes connues telles que le planage et/ou la mise en forme peuvent être optionnellement réalisées avant ou après la traction contrôlée. Un revenu est réalisé à une température comprise entre 120 et 170°C pendant 5 à 100 h préférentiellement entre 140 et 160°C pendant 20 à 60 h. De préférence le revenu est tel que le temps équivalent t(eq) à 155 °C soit compris entre 20 et 40 heures et de préférence entre 25 et 35 heures. Le temps équivalent t(eq) à 155 °C est défini par la formule :

$$t(eq) = \frac{\int \exp(-11400/T)\, dt}{\exp(-11400/T_{ref})}$$

où T (en Kelvin) est la température instantanée de traitement, qui évolue avec le temps t (en heures), et $T_{ref}$ est une température de référence fixée à 428 K. t(eq) est exprimé en heures. La constante Q/R = 11400 K est dérivée de l'énergie d'activation pour la diffusion du Li Q = 95000 J/mol. La formule donnant t(eq) tient compte des phases de chauffage et de refroidissement.

Les états métallurgiques préférés sont pour les tôles les états T8, plus particulièrement T84 ou T86.

La combinaison de propriétés désirables : une faible densité, une ténacité et une résistance à la propagation des fissures en fatigue élevées, une stabilité thermique et une résistance mécanique suffisantes est difficile à obtenir simultanément. Dans le cadre de l'invention, il est possible de manière surprenante de combiner une faible densité avec un compromis de propriétés très avantageux.

Le procédé selon l'invention est utilisé pour fabriquer des produits laminés et/ou forgés. D'une manière avantageuse, le procédé selon l'invention est utilisé pour fabriquer des tôles.

Le procédé selon l'invention est particulièrement avantageux pour obtenir des produits laminés en alliage Al-Cu-Li stables thermiquement, de faible densité et de ténacité et de résistance en fatigue élevée avec cependant une résistance mécanique suffisante, pour des applications aéronautiques. Parmi les produits laminés, les tôles fortes dont l'épaisseur est au moins de 14 mm et de préférences d'au moins 20 mm et/ou au plus 100 mm et de préférence au plus 60 mm sont avantageuses.

Avantageusement, les tôles fortes obtenues par le procédé selon l'invention comprennent à mi-épaisseur à l'état T84 pour une épaisseur comprise entre 20 mm et 50 mm

une limite d'élasticité $R_{p0,2}$ dans le sens L d'au moins 390 MPa et de préférence d'au moins 395 MPa et

une ténacité $K_{app}$(L-T) mesurée sur des éprouvettes de largeur W= 406 mm, d'au moins

$$105\ \mathrm{MPa}\sqrt{m}$$

après revenu et même après un vieillissement de 3000 heures à 85 °C,

un nombre de cycles dans la condition 6,5 MPa√m<ΔK<16.6 MPa√m d'au moins 250 000 et de préférence d'au moins 280 000 pour un essai de fatigue réalisé selon la norme ASTM E647 sur des éprouvettes de type CCT de largeur W=160mm prélevées dans la direction L-T à ¼ épaisseur.

Le présent inventeur a constaté que la présence de Zr, associée à une température de déformation à chaud adaptée agissent tous deux sur le contrôle de la texture ce qui permet d'obtenir avantageusement une texture telle que à mi-épaisseur la fraction volumique des grains ayant une texture laiton est comprise entre 25 et 40 % et l'indice de texture est compris entre 12 et 18. Cette texture particulière associée à la composition permet d'atteindre simultanément des performances en résistance mécanique, ténacité fatigue et stabilité thermique très avantageuses.

Les produits selon l'invention peuvent être utilisés en tant qu'élément de structure, notamment dans la construction aéronautique.

Dans une réalisation avantageuse de l'invention, les produits selon l'invention sont utilisés comme élément d'intrados d'aile d'avion.

**EXEMPLES**

**Exemple 1**

5 alliages ont été coulés sous forme de plaque. Leur composition et leur densité calculée sont données dans le Tableau 1. L'alliage 4 est une composition selon l'invention. L'alliage 5 est un alliage de référence déjà mentionné dans la demande WO2011/141647.

Tableau 1: Composition chimique (% en poids) et densité calculée

| Alliage | Si | Fe | Cu | Mn | Mg | Ti | Zr | Li | Ag | Densité |
|---------|------|-------|------|------|------|-------|-------|------|------|--------|
| 1 | 0,017 | 0,027 | 2,73 | 0,00 | 0,00 | 0,029 | >0.12 | 1,60 | 0 | 2,630 |
| 2 | 0,026 | 0,026 | 2,69 | 0,00 | 0,37 | 0,032 | >0.12 | 1,55 | 0 | 2,629 |
| 3 | 0,016 | 0,036 | 2,47 | 0,33 | 0,35 | 0,035 | 0,030 | 1,50 | 0 | 2,633 |
| 4 | 0,015 | 0,029 | 2,09 | 0,00 | 0,34 | 0,036 | 0,13 | 1,57 | 0,16 | 2,620 |
| 5 | 0,030 | 0,052 | 2,21 | 0,38 | 0,28 | 0,039 | 0,13 | 1,46 | 0,25 | 2,639 |

Les plaques ont été homogénéisées 12h à 508 °C (alliages 1 à 4) ou 8h à 520 °C (alliage 5). Après homogénéisation, les plaques ont été réchauffées et laminées à chaud. Pour les alliages 1 à 4 deux conditions de laminage à chaud ont été testées. Le détail des conditions de laminage à chaud et les références des tôles correspondantes est donné dans le Tableau 2.

Tableau 2. Conditions de laminage à chaud.

| Référence de la tôle | Alliage | Température de réchauffage (°C) | Durée de réchauffage h | Température initiale de laminage à chaud T (°C) | Température finale de laminage à chaud (°C) | Epaisseur finale (mm) |
|---------|---------|---------|---------|---------|---------|---------|
| 1A | 1 | 492,0 | 12,0 | 466 | 360 | 35 |
| 1B | 1 | 492,0 | 12,0 | 463 | 448 | 35 |
| 2A | 2 | 492,0 | 12,0 | 473 | 372 | 35 |
| 2B | 2 | 492,0 | 12,0 | 465 | 449 | 35 |
| 3A | 3 | 492,0 | 12,0 | 444 | 410 | 35 |
| 3B | 3 | 492,0 | 12,0 | 443 | 317 | 35 |
| 4A | 4 | 492,0 | 12,0 | 442 | 458 | 35 |
| 4B | 4 | 492,0 | 12,0 | 441 | 365 | 35 |
| 5A | 5 | 492,0 | 12,0 | 470-490 | 470-490 | 40 |

Les tôles ainsi obtenues ont été mises en solution à 497 +/- 2 °C (1A à 4B) ou 524 +/- 2 °C (5A), trempées avec de l'eau et tractionnées avec un allongement permanent d'environ 4%. Différentes conditions de revenu ont été testées sur des échantillons de taille modeste.

Tableau 3 . Caractéristiques mécaniques obtenues après différents essais de revenu

| Reference | Traction | Température | Temps | Rm | RP 0,2 | El | Kq |
|-----------|----------|------------|-------|------|--------|------|--------|
|  |  | °C | h | Mpa | Mpa | % | Mpa√m |
| 1A | 4% | 140 | 20 | 378 | 299 | 10,6 | 48,01 |
| 1A | 4% | 140 | 40 | 433 | 363 | 10,1 | 51,93 |
| 1A | 4% | 140 | 80 | 477 | 419 | 11,4 | 40,12 |
| 1A | 4% | 140 | 160 | 507 | 461 | 12,4 | 28,66 |
| 1B | 4% | 140 | 20 | 375 | 291 | 11,3 | 48,25 |
| 1B | 4% | 140 | 40 | 424 | 351 | 11,2 | 52,29 |

(suite)

| Reference | Traction | Température | Temps | Rm | RP 0,2 | El | Kq |
|---|---|---|---|---|---|---|---|
| | | °C | h | Mpa | Mpa | % | Mpa√m |
| 1B | 4% | 140 | 80 | 478 | 422 | 11,2 | 39,46 |
| 1B | 4% | 140 | 160 | 506 | 462 | 12,3 | 29,00 |
| 2A | 4% | 140 | 20 | 419 | 321 | 13,4 | 52,79 |
| 2A | 4% | 140 | 40 | 460 | 380 | 13,1 | 52,60 |
| 2A | 4% | 140 | 80 | 511 | 458 | 10,8 | 43,23 |
| 2A | 4% | 140 | 160 | 537 | 500 | 10,3 | 34,45 |
| 2B | 4% | 140 | 20 | 410 | 307 | 15,4 | |
| 2B | 4% | 140 | 40 | 448 | 365 | 11 | 53,51 |
| 2B | 4% | 140 | 80 | 502 | 447 | 10,9 | 41,72 |
| 2B | 4% | 140 | 160 | 528 | 488 | 11,3 | 34,59 |
| 3A | 4% | 140 | 20 | 369 | 274 | 17,1 | 44,95 |
| 3A | 4% | 140 | 40 | 402 | 322 | 14,5 | 52,26 |
| 3A | 4% | 140 | 80 | 451 | 393 | 12,6 | 57,11 |
| 3A | 4% | 140 | 160 | 487 | 449 | 11,2 | 48,95 |
| 3B | 4% | 140 | 20 | 341 | 250 | 22,7 | 43,45 |
| 3B | 4% | 140 | 40 | 370 | 292 | 20,2 | 50,13 |
| 3B | 4% | 140 | 80 | 423 | 365 | 14,9 | 53,64 |
| 3B | 4% | 140 | 160 | 462 | 423 | 12,4 | 44,39 |
| 4A | 4% | 155 | 13 | 379 | 289 | 13,8 | 48,89 |
| 4A | 4% | 155 | 18 | 394 | 313 | 13,6 | 50,82 |
| 4A | 4% | 155 | 30 | 426 | 360 | 11 | 55,09 |
| 4A | 4% | 155 | 60 | 461 | 415 | 11,1 | 46,16 |
| 4B | 4% | 155 | 13 | 390 | 306 | 14 | 49,29 |
| 4B | 4% | 155 | 18 | 405 | 329 | 11,1 | 51,80 |
| 4B | 4% | 155 | 30 | 437 | 377 | 11,3 | 52,55 |
| 4B | 4% | 155 | 60 | 475 | 433 | 11,9 | 44,33 |

Les essais effectués ont permis de déterminer des conditions optimales de traitement de revenu pour l'état T84 des tôles d'échelle industrielle, ainsi les tôles en alliage 1 et 2 ont ensuite subi un revenu de 40 heures à 140 °C, les tôles en alliage 3 ont subi un revenu de 80 heures à 140 °C et les tôles en alliage 4 ont subi un revenu de 30 heures à 155 °C et les tôles en alliages 5, dont les conditions optimales avaient déjà été déterminées ont subi un revenu de 36 heures à 155 °C.

Les résultats obtenus sur les tôles d'échelle industrielle sont donnés dans le tableau 4

On a mesuré les caractéristiques mécaniques statiques des tôles dans le sens L ainsi que la ténacité sur des éprouvettes de largeur 406 mm et d'épaisseur B = 6,35 mm, dans le sens L-T. Les caractéristiques mécaniques statiques et la ténacité ont été mesurées à mi-épaisseur. De plus, on a mesuré la fatigue sous spectre représentative des conditions intrados d'un avion commercial selon la spécification d'un fabriquant d'avion sur des éprouvettes de type CCT, d'épaisseur 12 mm, de longueur 700 mm et de largeur 200 mm ayant une entaille de 30 mm. Les éprouvettes de caractérisation de fatigue sous spectre ont été prélevées de façon à être centrées 11 mm sous la surface de la tôle. Les résultats de fatigue sous spectre ont été obtenus après une préfissuration par fatigue jusqu'à ce la fissure atteigne 40 mm. Le résultat obtenu est le nombre de vols entre 50 mm et 130 mm de propagation de fissure.

On a également mesuré la vitesse de propagation de fissures en fatigue selon la norme E647 sur des éprouvettes de type CCT de largeur W= 160mm prélevée dans la direction L-T à ¼ épaisseur et d'épaisseur B= 5 mm. L'éprouvette a été pré-fissurée par un chargement en fatigue en accord avec les recommandations de la norme. Pour l'essai de propagation l'éprouvette a été chargée de façon cyclique avec une amplitude de charge constante. La fréquence d'essai a aussi été maintenue constante pendant l'essai, tout comme le rapport de charge R=0,1.

Tableau 4 - Essais mécaniques sur les tôles industrielles

| | Essai de fatigue selon la norme E6467 | | | $R_{p0,2}$ L MPa | Rm L Mpa | Kapp L-T MPa√m | Fatigue sous spectre nombre de vols |
|---|---|---|---|---|---|---|---|
| | mm/cycle à ΔK=10 MPa√m | Cycles de 6.6 à 16.5 MPa√m | Pression de vapeur d'eau daPa | | | | |
| 1A | 4,77E-05 | 439070 | ≥ 100 | 383 | 444 | 110 | 7078 |
| 1B | -- | -- | -- | 381 | 444 | 111 | 6849 |
| 2A | 3,06E-05 | 504912 | ≥ 100 | 417 | 480 | 117 | 6508 |
| 2B | -- | -- | -- | 405 | 472 | 113 | 6900 |
| 3A | 2,91E-05 | 472231 | ≥ 100 | 411 | 459 | 117 | 6922 |
| 3B | -- | -- | -- | 382 | 429 | 115 | 6687 |
| 4A | -- | -- | -- | 381 | 438 | 114 | 6499 |
| 4B | 8,67E-05 | 284597 | ≥ 100 | 396 | 448 | 113 | 6841 |
| 5A | 9,97E-05 | 181985 | ≥ 100 | 434 | 474 | 117 | 5235 |

La stabilité thermique a été testée par un traitement de 3000 heures à 85 °C. L'écart avec les valeurs obtenues à l'issue du revenu est présenté dans le Tableau 5. Seuls certaines tôles ont pu être testées mais pour un même alliage et un même traitement de revenu on s'attend à ce que la stabilité thermique soit semblable quelles que soient les conditions de laminage à chaud. Le présent inventeur est donc convaincus que la stabilité thermique des tôles 1B et 2B serait significativement moins favorable que celle des tôles 3A et 4B

Tableau 5 Effet d'une exposition thermique de 3000h 85°C

| | Variation de propriétés après exposition thermique de 3000h 85°C | |
|---|---|---|
| | ΔTYS L t/2 MPa | ΔKapp L-T t/2 Mpa√m |
| 1A | + 95 | -14 |
| 2A | + 97 | -19 |
| 3A | + 80 | -1 |
| 4B | + 98 | -4 |
| 5A | + 53 | -- |

Ainsi les tôles 3A et 4B présentent un compromis de propriétés particulièrement favorables. En particulier

•   Une limite d'élasticité $R_{p0,2}$(L) supérieure à 390 MPa

•   Une tenacité $K_{app}$L-T (W= 406mm) d'au moins 105 MPa√m même après 3000 heures à 85 °C

•   Une fatigue sous spectre supérieure à 6700 vols

•   Un nombre de cycles dans la condition 6,5 MPa√m<ΔK<16.6 MPa√m d'au moins 250 000

Le présent inventeur a caractérisé la texture de ces tôles particulièrement favorables et ont constaté qu'elles présentent des caractéristiques communes.

Les caractéristiques de texture sont données dans le tableau 6.

Tableau 6 - Résultat des mesures de texture

|  | fraction volumique de texture cuivre (%) | fraction volumique de texture laiton (%) | fraction volumique de texture S (%) | Indice de texture |
|---|---|---|---|---|
| 1A | 8,2 | 32,3 | 39,0 | 16,1 |
| 1B | 7,0 | 36,9 | 38,6 | 20,1 |
| 2A | 9,6 | 32,6 | 35,7 | 15,0 |
| 2B | 5,7 | 34,3 | 41,7 | 21,1 |
| 3A | 6,3 | 31,6 | 32,0 | 14,8 |
| 3B | 3,4 | 14,9 | 15,9 | 3,6 |
| 4A | 7,7 | 36,7 | 39,2 | 19,5 |
| 4B | 8,7 | 29,8 | 38,5 | 15,4 |
| 5A | 6,4 | 35,2 | 36,4 | 16,4 |

En particulier leur fraction volumique de grains de texture laiton est comprise entre 25 et 40 % et leur indice de texture est compris entre 12 et 18. Les tôles 1A et 2A présentent des caractéristiques de texture voisines des tôles 3A et 4B, cependant leur stabilité thermique n'est pas satisfaisante ce qui pourrait être lié à la teneur en cuivre. De même la tôle 5A présente une texture voisine des tôles 3A et 4B mais la présence simultanée de manganèse et de zirconium semble avoir un effet néfaste sur les propriétés en fatigue. La tôle 4B présente l'avantage d'une densité plus faible que la tôle 3A pour des propriétés comparables.

**Revendications**

1.   Procédé de fabrication d'un produit laminé ou forgé dans lequel :

   (a) on coule une plaque en alliage de composition, en % en poids,

   Cu : 1,8 - 2,6
   Li : 1,3 - 1,8
   Mg : 0,1 - 0,5
   Mn < 0,05 et Zr 0.10 - 0.16
   Ag : 0 - 0,5
   Zn < 0,20
   Ti: 0,01 - 0,15
   Fe : < 0,1
   Si: < 0,1
   autres éléments < 0,05 chacun et < 0,15 au total, reste aluminium
   dont la densité est inférieure à 2,670 g/cm3,

   (b) on homogénéise ladite plaque à 480 à 540°C pendant 5 à 60 heures,
   (c) on déforme à chaud par laminage et/ou forgeage ladite plaque les conditions de déformation à chaud étant telles lorsque la teneur en manganèse est inférieure à 0,05 % en poids et la teneur en zirconium est comprise entre 0,10 et 0,16 % en poids la température finale de déformation à chaud est au plus de 400 °C, pour obtenir un produit laminé et/ou forgé dont l'épaisseur est comprise entre 14 et 100 mm,
   (d) on met en solution ledit produit à 490 à 530°C pendant 15 minutes à 8 heures,
   (e) on trempe avec de l'eau,
   (f) on tractionne de façon contrôlée ledit produit avec une déformation permanente de 1 à 6 %,
   (g) on réalise un revenu dudit produit par chauffage à 120 à 170°C pendant 5 à 100 heures.

2.   Procédé selon la revendication 1 dans lequel la teneur en cuivre dudit alliage est comprise entre 1,9 et 2,3 % en poids.

3.   Procédé selon la revendication 1 ou la revendication 2 dans lequel la teneur en lithium dudit alliage est comprise entre 1,4 et 1,6 % en poids.

**4.** Procédé selon une quelconque des revendications 1 à 3 dans lequel la teneur en magnésium dudit alliage est comprise entre 0,1 et 0,4 % en poids.

**5.** Procédé selon une quelconque des revendications 1 à 4 dans lequel la teneur en manganèse dudit alliage est inférieure à 0,04 % en poids et dont la teneur en zirconium dudit alliage est comprise entre 0,11 et 0,15 % en poids.

**6.** Procédé selon une quelconque des revendications 1 à 5 dans lequel la teneur en argent dudit alliage est comprise entre 0,05 et 0,25 % en poids.

**7.** Procédé selon une quelconque des revendications 1 à 6 dans lequel la teneur en zinc dudit alliage est inférieure à 0,05 % en poids, la teneur en silicium dudit alliage est inférieure à 0,08 % en poids et la teneur en fer dudit alliage est inférieure à 0,08 % en poids.

**8.** Procédé selon une quelconque des revendications 1 à 7 revenu est tel que le temps équivalent t(eq) à 155 °C est compris entre 20 et 40 heures et de préférence entre 25 et 35 heures. Le temps équivalent t(eq) à 155 °C étant défini par la formule :

$$t(eq) = \frac{\int exp(-11400/T)\, dt}{exp(-11400/T_{ref})}$$

où T (en Kelvin) est la température instantanée de traitement, qui évolue avec le temps t (en heures), et Tref est une température de référence fixée à 428 K. t(eq) est exprimé en heures.

**9.** Produit laminé et/ou forgé susceptible d'être obtenu par le procédé selon une quelconque des revendications 1 à 8 dont l'épaisseur est comprise entre 20 mm et 50 mm et dont la limite d'élasticité à mi-épaisseur Rp0,2(L) est au moins 390 MPa, la ténacité KappL-T (W= 406mm) est au moins 105 MPa√m même après vieillissement de 3000 heures à 85 °C et le nombre de cycles dans la condition 6,5 MPa√m<ΔK<16.6 MPa√m d'au moins 250 000 pour un essai de fatigue réalisé selon la norme ASTM E647 sur des éprouvettes de type CCT de largeur W= 160mm prélevées dans la direction L-T à ¼ épaisseur.

**10.** Utilisation d'un produit selon la revendication 9 comme élément de structure dans la construction aéronautique et de préférence comme élément d'intrados d'aile d'avion.

**Patentansprüche**

**1.** Verfahren zur Herstellung eines Walz- oder Schmiedeerzeugnisses, bei dem:

(a) ein Barren gegossen wird, aus einer Legierung folgender Zusammensetzung in Gewichtsprozent,

Cu: 1,8 - 2,6
Li: 1,3 - 1,8
Mg: 0,1 - 0,5
Mn < 0,05 und Zr 0,10 - 0,16
Ag: 0 - 0,5
Zn: < 0,20
Ti: 0,01 - 0,15
Fe: < 0,1
Si: < 0,1
weitere Elemente jeweils < 0,05 und insgesamt < 0,15, Rest Aluminium,
mit einer Dichte von weniger als 2,670 g/cm3,

(b) der Barren bei 480 bis 540°C für 5 bis 60 Stunden homogenisiert wird,
(c) der Barren durch Walzen und/oder Schmieden warm verformt wird, wobei die Verformungsbedingungen so gewählt sind, dass bei einem Mangangehalt von weniger als 0,05 Gew.-% und einem Zirkoniumgehalt von 0,10 bis 0,16 Gew.-% die Warmverformungsendtemperatur höchstens 400°C beträgt, um ein Walz- oder Schmiedeerzeugnis zu erhalten, das eine Dicke im Bereich von 14 bis 100 mm aufweist,

(d) das Erzeugnis bei 490 bis 530°C für 15 Minuten bis 8 Stunden lösungsgeglüht wird,

(e) mit Wasser abgeschreckt wird,

(f) das Erzeugnis kontrolliert gereckt wird, mit einer bleibenden Verformung von 1 bis 6 %,

(g) das Erzeugnis durch Erwärmen auf 120 bis 170°C für 5 bis 100 Stunden warm ausgelagert wird.

2. Verfahren nach Anspruch 1, wobei der Kupfergehalt der Legierung zwischen 1,9 und 2,3 Gew.-% liegt.

3. Verfahren nach Anspruch 1 oder Anspruch 2, wobei der Lithiumgehalt der Legierung zwischen 1,4 und 1,6 Gew.-% liegt.

4. Verfahren nach irgendeinem der Ansprüche 1 bis 3, wobei der Magnesiumgehalt der Legierung zwischen 0,1 und 0,4 Gew.-% liegt.

5. Verfahren nach irgendeinem der Ansprüche 1 bis 4, wobei der Mangangehalt der Legierung weniger als 0,04 Gew.-% beträgt und der Zirkoniumgehalt der Legierung zwischen 0,11 und 0,15 Gew.-% liegt.

6. Verfahren nach irgendeinem der Ansprüche 1 bis 5, wobei der Silbergehalt der Legierung zwischen 0,05 und 0,25 Gew.-% liegt.

7. Verfahren nach irgendeinem der Ansprüche 1 bis 6, wobei der Zinkgehalt der Legierung weniger als 0,05 Gew.-%, der Siliziumgehalt der Legierung weniger als 0,08 Gew.-% und der Eisengehalt der Legierung weniger als 0,08 Gew.-% beträgt.

8. Verfahren nach irgendeinem der Ansprüche 1 bis 7, wobei das Warmauslagern so erfolgt, dass die Äquivalentzeit t(eq) bei 155°C zwischen 20 und 40 Stunden und vorzugsweise zwischen 25 und 35 Stunden liegt, wobei die Äquivalentzeit t(eq) bei 155°C definiert ist durch die Formel:

$$t(eq) = \frac{\int \exp(-11400/T)\,dt}{\exp(-11400/T_{ref})}$$

worin T (in Kelvin) die jeweilige Behandlungstemperatur ist, die sich mit der Zeit t (in Stunden) verändert, und $T_{ref}$ eine auf 428 K festgelegte Referenztemperatur ist, wobei t(eq) in Stunden ausgedrückt ist.

9. Walz- und/oder Schmiedeerzeugnis, das mit dem Verfahren nach irgendeinem der Ansprüche 1 bis 8 gewonnen werden kann, dessen Dicke zwischen 20 und 50 mm liegt und dessen Dehngrenze bei halber Dicke Rp0,2(L) mindestens 390 MPa beträgt, wobei die Zähigkeit KappL-T (W = 406 mm) selbst nach einer Auslagerungsbehandlung von 3000 Stunden bei 85°C mindestens 105 MPa√m beträgt und die Zahl der Zyklen mit der Vorgabe 6,5 MPa√m<ΔK<16.6 MPa√m bei einem nach der Norm ASTM E647 durchgeführten Ermüdungsversuch an in L-T-Richtung bei ¼ Dicke entnommenen Probekörpern des Typs CTT mit der Breite W = 160 mm mindestens 250 000 beträgt.

10. Verwendung eines Erzeugnisses nach Anspruch 9 als Strukturelement im Flugzeugbau und vorzugsweise als Flügelunterseitenelement eines Flugzeugs.

**Claims**

1. Method for manufacturing a rolled or forged product wherein:

(a) a plate is cast made of an alloy composition, as a % by weight,

Cu: 1.8 - 2.6
Li: 1.3 - 1.8
Mg: 0.1 - 0.5
Mn < 0.05 and Zr 0.10 - 0.16
Ag: 0 - 0.5

Zn < 0.20
Ti: 0.01 - 0.15
Fe: < 0.1
Si: < 0.1
other elements < 0.05 each and < 0.15 in total, remainder aluminium of which the density is less than 2.670 g/cm3,

(b) said plate is homogenised at 480 to 540°C for 5 to 60 hours,
(c) said plate is heat distorted by rolling and/or forging with the heat distortion conditions being such that when the manganese content is less than 0.05% by weight and the zirconium content is between 0.10 and 0.16% by weight the heat distortion final temperature is at most 400°C, in order to obtain a rolled and/or forged product of which the thickness is between 14 and 100 mm,
(d) said product undergoes a solution treatment at 490 to 530°C for 15 minutes to 8 hours,
(e) it is quenched with water,
(f) said product is stretched in a controlled manner with a permanent deformation of 1 to 6%,
(g) said product is aged by heating at 120 to 170°C for 5 to 100 hours.

2.  Method according to claim 1 wherein the copper content of said alloy is between 1.9 and 2.3% by weight.

3.  Method according to claim 1 or claim 2 wherein the lithium content of said alloy is between 1.4 and 1.6% by weight.

4.  Method according to any of claims 1 to 3 wherein the magnesium content of said alloy is between 0.1 and 0.4% by weight.

5.  Method according to any of claims 1 to 4 wherein the magnesium content of said alloy is less than 0.04% by weight and of which the zirconium content of said alloy is between 0.11 and 0.15% by weight.

6.  Method according to any of claims 1 to 5 wherein the silver content of said alloy is between 0.05 and 0.25% by weight.

7.  Method according to any of claims 1 to 6 wherein the zinc content of said alloy is less than 0.05% by weight, the silicon content of said alloy is less than 0.08% by weight and the iron content of said alloy is less than 0.08% by weight.

8.  Method according to any of claims 1 to 7 wherein the ageing is such that the equivalent time t(eq) at 155°C is between 20 and 40 hours and preferably between 25 and 35 hours. The equivalent time t(eq) at 155°C being defined by the formula:

$$t(eq) = \frac{\int exp(-11400/T) \, dt}{exp(-11400/T_{ref})}$$

where T (in Kelvin) is the instantaneous treatment temperature, which changes with the time t (in hours), and Tref is a reference temperature set to 428 K. t(eq) is expressed in hours.

9.  Rolled and/or forged product able to be obtained by the method according to any of claims 1 to 8 of which the thickness is between 20 mm and 50 mm and of which the yield strength at mid-thickness Rp0.2(L) is at least 390 MPa, the KappL-T toughness (W= 406 mm) is at least 105 MPa√m even after ageing for 3,000 hours at 85°C and the number of cycles in the condition 6.5 MPa√m<ΔK<16.6 MPa√m at least 250,000 for a fatigue test conducted according to standard ASTM E647 on test pieces of the CCT type with a width W = 160 mm sampled in the direction L-T at 1/4 thickness.

10. Use of a product according to claim 9 as a structural element in aeronautical construction and preferably as an aircraft lower wing element.

FIG 1

## RÉFÉRENCES CITÉES DANS LA DESCRIPTION

**Documents brevets cités dans la description**

- US 5032359 A
- US 5198045 A
- US 7229509 B
- EP 1966402 A
- EP 1891247 A
- US 5455003 A
- WO 2010055225 A
- WO 2011141647 A

**Littérature non-brevet citée dans la description**

- **LEE CHANG-SOON et al.** Effect of microstructure and load ratio on fatigue crack growth behavior of advanced Al-Cu-Li-Mg-Ag alloys. *Metals and Materials*, 1997, vol. 3 (1), 51-59